# EUROPEAN PATENT SPECIFICATION

(11) **EP 2 824 781 B1**
(45) Date of publication and mention of the grant of the patent: **27.11.2019**
(21) Application number: 14173200.8
(22) Date of filing: 20.06.2014
(51) Int. Cl.: H02G 1/00, H02G 3/00, H02G 3/12

(54) **Assembly with functional module and method for connecting and building in such a functional module**
Anordnung mit Funktionsmodul und Verfahren zum Verbinden und Einbau eines solchen Funktionsmoduls
Ensemble avec module fonctionnel et procédé pour connecter et monter un tel module fonctionnel

(30) Priority: 21.06.2013 BE 201300430
(43) Date of publication of application: 14.01.2015
(73) Proprietor: Niko NV, 9100 Sint-Niklaas (BE)
(72) Inventor: Totté, Lieven, 9140 Elversele (BE)
(74) Representative: D'Halleweyn, Nele Veerle Trees Gertrudis

(56) References cited:
- DE-A1- 1 490 327
- FR-A- 1 435 895
- FR-A5- 2 053 463
- NL-A- 8 901 996
- US-A- 6 086 390
- US-A1- 2003 141 092
- US-B1- 6 435 903

## Description

The present invention relates to an assembly with a functional module which is connected via at least one cable, the assembly being for building into a wall, in particular a prefabricated or prefab wall. The invention also relates to a method for connecting and building such an assembly into a wall.

Mounting boxes for building into a wall are known in the art. Such mounting boxes have as an advantage that an electric or electronic function such as a socket, a switch, a network termination point and the like, can be safely built into a wall, whereby the necessary cable connections are realized in the mounting box so that, after building in, only a small volume of the functional part will be outside the volume of the wall itself. Such mounting boxes have, however, the disadvantage that an electrician has to perform a relatively large amount of work on site, such as pulling cables, connecting the cables, mounting the connected functional module in the mounting box, and attaching a cover frame. This requires skilled staff.

NL 8 901 996 describes a box which has a bottom part and an upper part which, when put together, define conduits for receiving cables. The conduits are, at their ends furthest away from the box, provided with breaking ports for closing off the conduits to avoid fluids or other materials to enter the box via these conduits. The other end of the conduit, which is closest to the box, has a rounded edge to avoid damage of the isolation of the cables when the cables are provided.

DE 14 90 327 describes a mounting box with supporting members for accommodating an electrical function in such a way that the electrical function is completely sunk in a mounting box and building panel. In this way, protruding parts of the electrical function are avoided, thereby preventing damage during transport of building panel. A cover for the protection of parts of the electrical function against mechanical damages is not required as no stress can be exerted on the electrical function during transport. To protect against dust, however, a cover can be provided. Electrical wires are connected to the electrical function and are embedded in the building panel. DE 14 90 327 discloses the preamble of claim 1.

FR 2 053 463 discloses a prefabrication method for electrical installations in which the free ends of standard electrical conduits are connected in advance to a switchboard and provided with watertight protection, intended to be embedded at an appropriate level within a wall, before pouring the concrete to constitute the wall. The switchboard itself is connected, by a suitable number of standard electrical conduits designed to be embedded in concrete, to an insulating box that can also be embedded in the concrete.

Embodiments of the present invention aim at providing an assembly and a method to simplify the connection of the functional modules. In particular, the invention aims at providing an assembly and a method which enable the connection of the functional module with one or more cables, prior to building the functional module into a wall.

According to an aspect of the invention an assembly with the features of claim 1 is provided for building into a wall.

By providing an open back end, connecting the at least one cable and inserting the functional module in the mounting box is simplified. Existing mounting boxes typically have a closed back end and the cables must be inserted in the mounting box through a hole in the bottom of the mounting box, after which they can be connected with the functional module. This does not always work well and can take some time. After the cables are connected, the functional module can be placed in the mounting box.

Embodiments of the invention make it possible to first insert the functional module in the housing via the front end or the back end and to then connect the cables through the open back end. According to an alternative embodiment, the cables are first connected to the functional module, and the functional module is then provided in the housing through the open back end.

According to the invention, the tubular part and the closing part are adapted to tightly enclose one or more conduits for receiving the at least one cable. This can be a flexible or rigid conduit. Hence, first a conduit comprising the cables can be provided to a cable receiving part of the tubular part. After connecting the cables with the functional module, the mounting step can be easily completed by providing the closing part. When the conduit is provided with ribs, as is the case for a typical flexible conduit, the conduit can for example be held between two ribs between the closing part and the tubular part. According to an advantageous embodiment, the tubular part and the closing part are adapted to be clipped together. Such embodiment will allow for a very fast preparation of the mounting boxes.

An assembly according to embodiments of the invention is particularly interesting for use in prefabricated walls, and allows mounting the functional module into the mounting box and connecting the cables at a first location, by which the front end of the tubular part is or will be closed. The closed mounting boxes with cables can then be transported to a second location where this will be moulded in the prefabricated walls. Because the mounting boxes are completely closed, they are protected during transport and storage against damage and/or soaking in of, for example, rainwater. For the sake of completeness, it is noted that the first and second location could also be the same, and that building in the functional module in the mounting box and/or connecting the cables can also happen in the mould which is used for the manufacturing of the walls.

The tubular part and the closing part preferably form, when attached to each other, at least one cable tray for receiving a conduit. Even more preferable, the tubular part comprises a conduit receiving part in which a conduit can be clamped. Because of this, a conduit can also be secured in the tubular part prior to providing the closing part. Such an embodiment of the mounting box allows to first providing the functional module and one or more conduits in the mounting box and to subsequently connect the electric cables. This enables easy connection of the cables with the functional module. Compared to solutions known in the art, where conduits must be pushed through an opening, conduits can now be provided much easier: a conduit can prior to providing the closing part, be fixed to the tubular part, typically in a part of a cable tray with is provided in the open back end, after which one or more cables can be connected.

According to an advantageous embodiment, the tubular part and the closing part form, when attached to each other, a first and a second cable tray, each for receiving a conduit. The first and the second cable tray are located on opposite sides of the functional module, typically at a top and a bottom side of the tubular part, seen in a built-in position of the mounting box in a wall. This further simplifies the connecting possibilities and allows to mutually connect different mounting boxes. According to a further embodiment, one or more cable trays may be running in a first direction and may be intended to be mainly aligned horizontally after being built into a wall, and one or more other cable trays may be oriented perpendicular thereto. These perpendicularly oriented cable trays are typically intended to be aligned vertically in a wall and may typically be suitable for receiving cables intended for connection to a main electric line.

The front end of the mounting box is open and the mounting assembly further comprises a cover or a foil that is intended to close the open front end. This makes it possible to, before building the mounting box into a prefabricated wall, provide the mounting box in the mould with the front end facing down. It is also possible to manufacture the mounting box with a cover that is formed as one single piece with the tubular part. Such a cover typically comprises a tear or break line, along which the cover can be torn off when it has to be removed.

According to a further embodiment, the closing part may, on its back side, be provided with a channel which is designed to receive a reinforcement bar. This outer side can also be provided with alignment means, such as ribs or grooves, to enable proper alignment of the mounting box in the mould. Providing of a reinforcement over the mounting boxes further helps for proper positioning of the mounting box in the mould. The weight of the reinforcement will ensure that the mounting box is pressed firmly against the bottom of the mould and cannot move while pouring the wall material into the mould.

The assembly may preferably furthermore comprise a cover frame that can be secured to the open front end and that is so dimensioned that it extends around a part of the functional module.

The functional module may preferably be one of the following modules: an electrical socket, a switch, a network termination point, a TV connection point, a telephone connection point. More in general, the functional module may be any electrical or electronic module that must be connected in a wall by means of one or more cables. Instead of a functional module, a shut-off plate can also be supplied within the mounting box.

According to the invention, the functional module is supported by an insert part that is mounted in the mounting box. The insert part may preferably be provided with at least two positioning elements that can cooperate with profiling on the inner wall of the mounting box. It is also possible to provide guiding elements to the inner wall of the mounting box for guiding the insert part to the locked position in which the positioning elements interact with the profiling. More in particular, the mounting box and the insert part can be designed to position the insert part in an installation position. This installation position is such that the at least one cable can be connected to the functional module through the open back end of the tubular part. The insert part is then preferably movable from the installation position to a position located deeper in the mounting box. Such an installation position allows a convenient way to connect the cables to the functional module.

According to still further embodiments, in addition to the installation position, also a building-in position and a use position may be provided. In the installation position, the insert part with the functional module is preferably located completely in the mounting box, while in the use position the functional module is preferably protruding partially out of the open front end of the mounting box. In that way, the mounting box can, in the installation position, simply be closed at the open front end and be provided in the mould, where the closed front end is facing the bottom of the mould. After the the wall has been placed at the construction site, the front end can be opened again and the insert part can be moved into the use position, after which a cover frame can be provided on the insert part for finishing the installation.

According to another aspect of the invention, a method according to claim 9 is provided for building at least one functional module into a wall. The method comprises providing a mounting box, and at least one via at least one cable in the mounting box mountable functional module, whereby the mounting box comprises at least one tubular part with a front end and an open back end, and a closing part. The at least one cable is connected to the at least one functional module and the at least one functional module is provided in the at least one tubular part, in such a way that the at least one cable runs through the open back end. According to a first option, the at least one functional module may first be provided in the tubular part, after which the at least one cable is connected through the open back end. According to an alternative embodiment, the at least one cable may first be connected to the functional module, after which the functional module is provided in the tubular part via the open back end. Then the closing part is provided against the open back end.

After that, the mounting box is built into a wall so that the functional module is accessible by an end user via the open front end.

Building the mounting box into a wall comprises the following steps: closing the open front end of the mounting box; providing the closed mounting box in a mould with the closed open front end facing the bottom of the mould; and pouring a wall material into the mould. It is noted that the closing of the open front end can be performed prior to connecting the at least one cable to the functional module and/or prior to providing the functional module in the tubular part.

The at least one cable is provided in one or more cable conduits, and these one or more conduits are provided in between the tubular part and the closing part.

According to an advantageous embodiment, the functional module is, during the connection of the at least one cable, supported by an insert part that is provided in the installation position in the tubular part. After connecting the at least one cable the insert part is preferably provided in a position deeper into the mounting box, after which the closing part is provided against the open back end.

According to an advantageous embodiment, the open front end may be closed by a removable cover or a foil. It can, however, also be thought of that the front end is closed and, for example, is opened at the construction site by means of a cutting action. It is also possible to manufacture the mounting box with a cover that is formed as one single piece with the tubular part and that comprises a tear or break line in such a way that the cover can easily be removed. After providing a wall on site, the front end can be opened and a cover frame can be mounted around a part of the functional module.

According to an advantageous embodiment, the open front end is closed off by means of a cover. The cover may comprise a coupling means to couple the cover to the insert part comprising the functional module. When the cover is removed, the insert part is then automatically pulled to the use position because of the coupling between the cover and the insert part.

The present invention will be explained by means of a number of, by no means limiting, exemplary embodiments with reference to the attached drawings, in which:
Figures 1A-1G schematically illustrate an embodiment of an assembly and a method according to the invention;
Figures 2A and 2B illustrate dismounted perspective views of a first embodiment of an assembly according to the invention, seen from two sides;
Figures 3A-3C illustrate sections of a mounting box with a functional module in respectivaly an installation position (figure 3A), a building-in position (also called pouring position) (figure 3B) and a use position (figure 3C);
Figures 4A and 4B show a perspective view of the assembly of figures 2A and 2B in the assembled state, in which the functional module is in the building-in position, and the cover is attached to the mounting box, respectively seen from a back side and a front side;
Figure 5 shows a perspective view of the assembly of figures 2A and 2B in the assembled state, in which the functional module is in the use position and a cover frame is mounted on the mounting box;
Figure 6 shows a perspective detailed view of the functional module in the building-in position, where parts of the mounting box are omitted for clarity reasons;
Figure 7 shows a perspective detailed view of the functional module in the use position, where part of the mounting box is omitted for clarity reasons;
Figures 8A and 8B illustrate a dismounted perspective view of a second embodiment of an assembly according to the invention, respectively seen from a back side and a front side;
Figure 9 shows the assembly of figure 8 in the assembled state, as seen from the back side;
Figure 10 shows the assembly of figure 8 in the assembled state, as seen from the front side; and
Figures 11A and 11B schematically illustrate a third embodiment of an assembly according to the invention.
In the drawings, identical or similar parts in different embodiments are referred to with the same reference numbers.

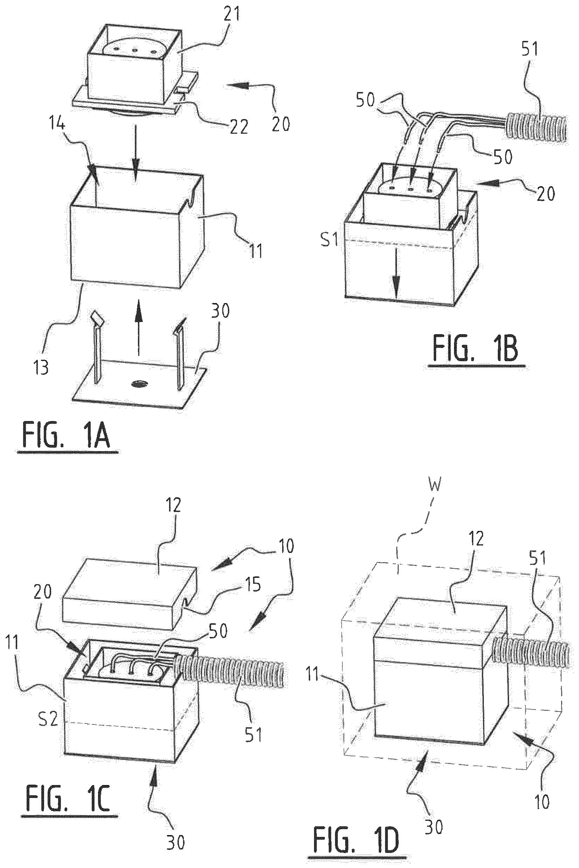

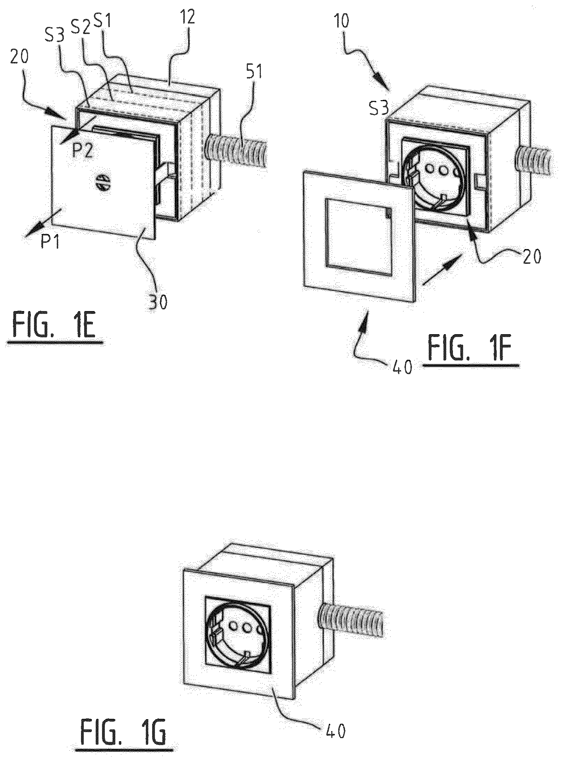

Embodiments of an assembly and a method according to the invention are first schematically illustrated based on figures 1A-1G. The assembly comprises a mounting box 10, an insert part 20 with a via at least one cable 50 connectable functional module 21, a cover 30, and a cover frame 40. The mounting box 10 comprises a tubular part 11 and a closing part 12. The tubular part 11 has an open front end 13 and an open back end 14. The terms "front" and "back" refer to the front side and back side when the mounting box is built into a vertical prefabricated wall W (the position which is illustrated in figures 1E-1G). In the steps illustrated in figures 1A-1D, the open front end 13 is located at the bottom and the open back end 14 is located at the top, because figures 1A-1D show the position when the mounting box 10 is placed in a mould in which the prefabricated wall W is manufactured in a horizontal position.

Figure 1A illustrates the steps of providing a cover 30 on the open front end 13 of the tubular part 11, and providing the insert part 20 via the open back end 14 in the tubular part 11 of the mounting box 10. In addition to the functional module 21, the insert part 20 typically comprises a mounting profile 22 which is adapted to mount the insert part 20 in the tubular part 11. According to a possible embodiment, the insert part 20 is mounted in an installation position S1 in the tubular part 11; see the dotted line in figure 1B that schematically shows the location of the mounting profile 22. In this installation position S1, the cables 50 can easily be connected with the functional module 21, see figure 1B. Typically, first a conduit 51 will be fixed to the tubular part 11 (see also figure 1C), after which the cables 50 are connected. According to another design, the cables 50 may be connected outside the tubular shaped part 11 (and not in the installation position SI), after which the insert part 20 is provided in the tubular part 11 via the open back end 14.

It is noted that the cover 30 should not necessarily be provided in a first step. According to an embodiment, the cover 30 can be provided after connecting the cables 50, or even after completing the step illustrated in figure 1C, see below. Connecting the cables 50 should not necessarily be done via the open back end 14. According to an embodiment, the mounting box 10 can be implemented as a single part with a closed back end 14 (and thus without separate closing part 12) and the cables 50 are connected via the open front end 13, prior to applying the insert part 20 in the mounting box 10. In such an embodiment, the insert part 20 will also be provided in the mounting box through the open front end 13.

After connecting the cables 50 the insert part 20 is brought in a building-in position S2, see the dotted line in figure 1C that schematically shows the location of the mounting profile 22. In this building-in position, the insert part 20 is provided deeper in the tubular part 11 in the direction towards the open front end 13 compared to the installation position S1. In this building-in position, the closing part 12 of the mounting box 10 is provided on the tubular part 11, with insertion of the cable conduit 51 in which the cables 50 are provided. This cable conduit 51 can be a flexible cable conduit or a rigid cable conduit. The tubular part 11 and the closing part 12 are preferably designed in such a way that, when providing to closing part 12 onto the tubular part 11, a cable tray 15 is defined for receiving the cable conduit 51. The cover part 12 and the tubular part 11 preferably connect closely to the cable conduit 51, and the tubular part 11 is provided with a cable conduit receiving part in which the cable conduit 51 can be clamped while connecting the cable(s) 50. The cable conduit 51 can hereby, for example, be clamped between two ribs in an adapted cutout or cable tray that is adjacent to the open back end 14, see figure 1C. Although figures 1B and 1C show an installation position which is different from the building-in position, it is also possible to provide a single installation and building-in position, i.e. the installation and building-in position may, according to embodiments of the invention, be the same. According to yet another embodiment, the cables 50 are first connected to the functional module 21, and the insert part 20 is then immediately brought into the in figure 1 illustrated building-in position.

After providing the closing part 12 and the cover 30 the assembled assembly can be placed into the mould, after which a wall material is poured into the mould for forming the prefabricated wall W. It has to be noted that one or more of the steps illustrated in figures 1A-1C may typically be performed at a first location, after which the closed mounting boxes 10 with conduits 51 are transported to a second location where the prefabricated wall is manufactured. However, it is also possible to perform one or more of the steps illustrated in figures 1A-1C directly in the mould prior to pouring the wall material into the mould. When the mounting box 10 is placed in the mould, the cover 30 is facing the bottom of the mould, as the bottom of the mould is adjacent to a surface of the prefabricated wall in which the assembly is to be built in. The conduit 51, which is located at the back side of the mounting box 10, will thus be embedded in the prefabricated wall.

After placing the prefabricated wall at the construction site, the mounting box 10 is oriented in the position illustrated in figure IE. The cover 30 is hereby flush-mounted with the outer surface of the prefabricated wall. After placing the prefabricated wall at the construction site, the cover 30 can be removed, see arrow P1. According to an advantageous embodiment, removal of the cover 30 simultaneously ensures movement of the insert part 20 from the building-in position S2 to a use position S3, see figures IE and IF and arrow P2. In the use position S3 the insert part 20 is partly protruding out of the mounting box 10. In this use position, cover frame 40 is mountable on the insert part 20, as illustrated in figure 1G. As can be seen in figure 1E, the installation position S1, the building-in position (also called transport position) S2 and the use position S3 are three subsequent positions in which the insert part 20 can be positioned, looking from the open back end 14 to the open front end 13 of the tubular part 11.

Although the mounting box 10, the insert part 20, the cover 30, and cover frame 40 are schematically shown in simplified format in figures 1A-1G, a person skilled in the art understands that these elements are provided with the necessary profilings and cutouts to allow attachment of the insert part 20 in the mounting box 10, provision of the cover 30 to the mounting box 10, the mounting of the cover frame 40 on the insert part 20, the provision of the closing part 12 on the tubular part 11, etc. The cover 30 can also be provided with a coupling means for coupling the cover 30 to the insert part 20. The coupling means is preferably designed to pull the insert part 20 from the building-in position to the use position when removing the cover 30 according to the arrows PI, P2 in figure IE. As illustrated in figures IF and 1G, the cover frame 40 is so dimensioned that, in the use position of the insert part 20, it extends around a from the mounting box 10 protruding part of the functional module 21 of the insert part 20.

Figures 1A-1G illustrate an insert part 20 with a socket 21 as a functional module. The functional module 21 may, however, also be another functional module that should be connected by means of a cable 50, like for example a switch, a network termination point, a TV connection point, and more generally any electrical or electronic functional module which has to be built into a wall.

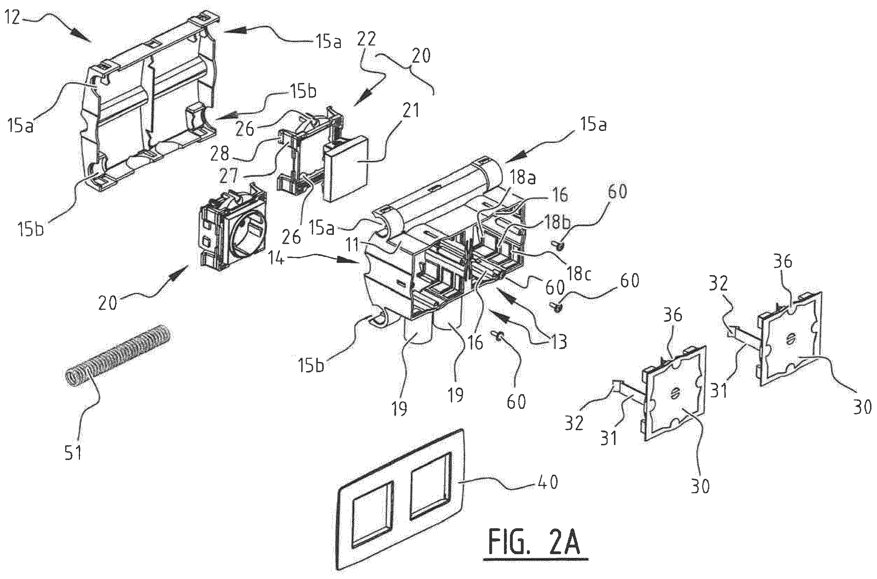

Now a more detailed first embodiment of an assembly according to the invention will be described based on figures 2A-2B, 3A-3C, 4A-4B, 5, 6 and 7. In this first embodiment, the mounting box 10 is intended for building in two functional modules 21. In the illustrated example, the functional modules 21 are a socket and a switch. The mounting box 10 in the first embodiment comprises two tubular parts 11 which have been designed as a single piece, and a closing part 12. A first insert part 20 comprises a mounting profile 22 and a shut-off plate 21. A second insert part 20 comprises a mounting profile 22 and a socket module 21. Each tubular part 11 has an open front end 13 and an open back end 14. The open front end 13 can be closed using a cover 30 or a foil. The rear open end 14 is closed with the closing part 12 of the mounting box 10.

To facilitate mounting of the insert part 20 in the tubular part 11, guiding elements 16, 26 may be provided. These guiding elements 16, 26 comprise a first profiling 16 provided in an inner wall of the tubular part 11 and a complementary profiling 26 provided in the mounting profile 22. The first profiling 16 is here formed as a protruding rounded rib which runs in a longitudinal direction of the tubular part 11 and the second profiling 26 is formed as a receiving channel for this rib. A person skilled in the art understands that many other guiding elements are possible within the framework of the invention.

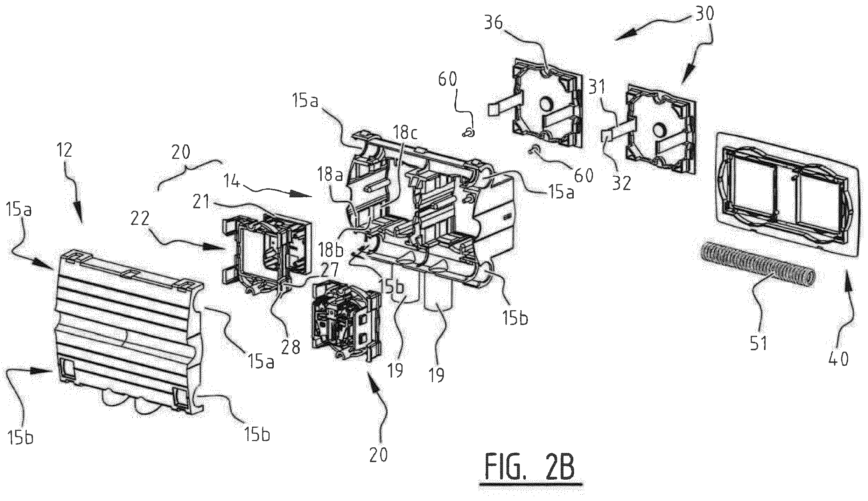

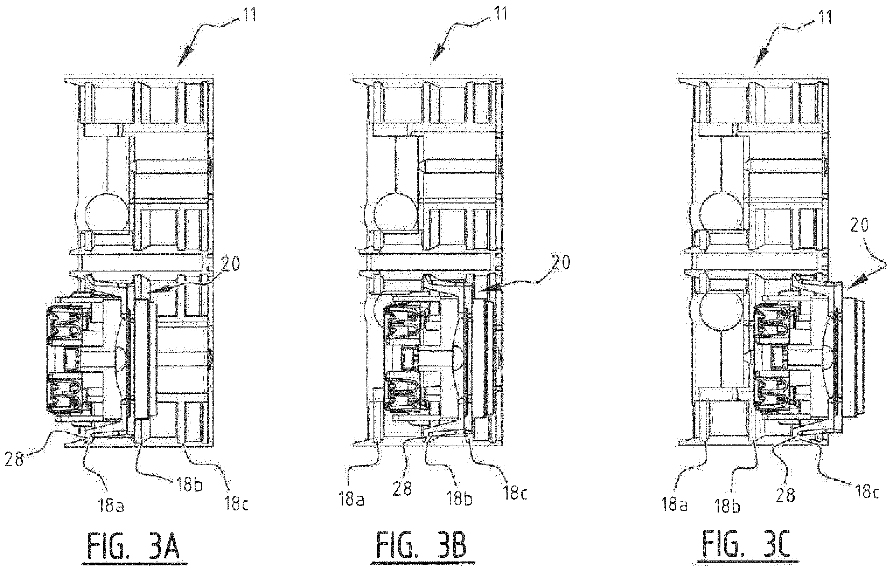

The mounting profile 22 is further provided with four positioning elements 27 which are situated near the four corners of the mounting profile 22. The positioning elements 27 are designed as spring-loaded lips with outwardly protruding thickenings 28 intended for being received in the customized cutouts 18 in the inner wall of the tubular part 11, as can best be seen in figures 2A and 2B, and 3A-3C. In the illustrated embodiment three sets of cutouts 18a, 18b, 18c are provided which correspond to an installation position (18a), a building-in position (18b) and a use position (18c). This ensures that the insert part 20 with the functional module 21 can be positioned into three respective positions, namely an installation position S1, a building-in position (also called transport position or pouring position) S2, and a use position S3, see respectively figures 3A-3C. In the installation position S1, a back side of the functional module 21 protrudes somewhat out of the open back end 14 of the tubular part 11, such that the cables 50 are easy connectable with the functional module 21. As explained with respect to figures 1A-G, connecting the cables 50 can be performed at a first location, after which the insert part 20 is placed in the building-in position S2, the closing part 12 is provided, and the whole can be transported to a second location where the prefabricated walls are then manufactured. According to another embodiment, connecting the cables 50 is performed in the mould before manufacturing the prefabricated wall. The assembled assembly (with insert part 20 in the installation position) is then placed in the mould with the cover 30 facing the bottom. Connecting the cables 50 can thus be performed while the parts 11 are provided in the mould. After connecting the cables 50, the insert part 20 can be pushed downwards in the tubular part 11 to bring the insert part 20 in the building-in position, see figure 3B. In this position, the closing part 12 can be provided on the tubular parts 11.

The one or more cables 50 are typically provided in a rigid or flexible conduit 51 which is, prior to connecting the cables 50, fixed in a conduit receiving part, which is positioned at the open back end 14 of the tubular part 11. After providing the closing part 12, the conduits 51 for the cables 50 are mounted between the closing part 12 and the tubular parts 11. For this, the closing part 12 and the tubular parts 11 are designed such that they define a cable tray 15a, 15b in which a cable conduit 51 can be provided. In the illustrated embodiment, cable trays 15a, 15 are provided on opposite sides of the functional modules 21, in the example given at a top and a bottom of the tubular part 11. However, designs can be thought of in which only one cable tray 15a, 15b is provided. For example, one cable tray 15a can be formed at the top of the functional module 21, or one cable tray 15b can be provided at the bottom of the functional module 21, or one cable tray can be provided in the middle of the functional module 21 (i.e. in between the top and the bottom of the functional module 21). In addition, two additional cable trays 19 can be provided which are directed transversely or perpendicular to the cable trays 15a, 15b. The cable trays 19 are typically intended for receiving rigid conduits 74. Cable trays 15a, 15b are typically intended to realize a connection between a first built-in mounting box 10 and a built-in mounting box 10 at a certain distance from the first built-in mounting box 10, while cable trays 19 are intended to receive cables for connection to a main electricity line. It is also possible to run conduits 51, 74 through a mounting box 10 without the cables 50 present therein being connected. The conduits 51, 74 can also be empty, or just comprise a pull wire with which, at the construction site, a cable 50 can be pulled up to the mounting box 10.

The tubular part 11 is formed such that the part that defines the cable tray 15a, 15b is designed to tightly contain conduit 51. In that way the one or more conduits 51 can be clamped in the tubular part 11 prior to providing the closing part 12.

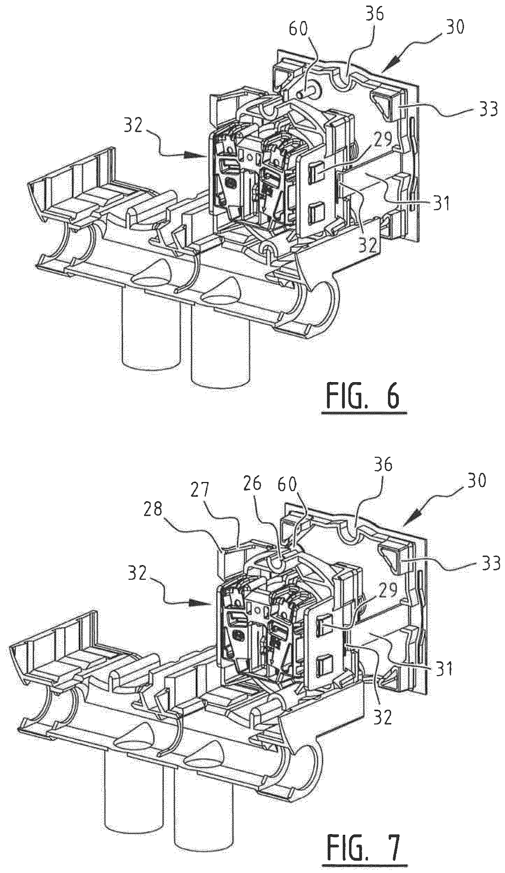

The cover 30 comprises a coupling means 31, 32 for coupling the cover 30 to the insert part 20. The coupling means 31, 32 is designed to simultaneously pull the insert part 20 from the building-in position to the use position when removing the cover 30. For that purpose, the cover 30 may, at its back side, be provided with two arms 31 with snap hooks 32. These snap hooks 32 are meant to cooperate with the insert part 20 when the insert part 20 is in the building-in position, as best illustrated in figure 6. In order to facilitate the provision of the cover 30, the insert part 20 is provided with guiding parts 29 for the arms 31. In the illustrated embodiment, two arms 31 are provided which are intended to extend on both sides of the functional module 21. A person skilled in the art understands that other implementations, for example, with four arms 31, can be thought of. Furthermore, cutouts 36 are provided in the extension of the rounded ribs 16 provided on the inner wall of the tubular part 11. Screw heads 60 fit into the cutouts 36. Further, the bottom of the cover 30 is provided with corner parts 33 close to the corners which corner parts 33 are intended to fit into the corners of the tubular part 11 (see figure 6). The arms 31 with snap hooks 32 are designed such that, on the one side, they are able to move the insert part 20 from the building-in position to the use position, and, on the other hand, after the insert part 20 is brought into the use position, to move along the insert part 20 to completely remove the cover 30, see figure 7. This is further achieved by the presence of screws 60 which ensure that the insert part 20 cannot be pulled out of the tubular part 11, see figures 2A and 2B and figure 7. It has to be noted that instead of screws 60, also an abutment part which is for example formed in one piece with the tubular part 11 can be provided.

The cover 30 is at its front side provided with two cutouts 37 to form a grip in which, for example, a tool can be positioned. In that way the cover 30 can easily be removed. This is just an example and a person skilled in the art understands that other grips or designs can be thought of to enable easy removal of the cover 30.

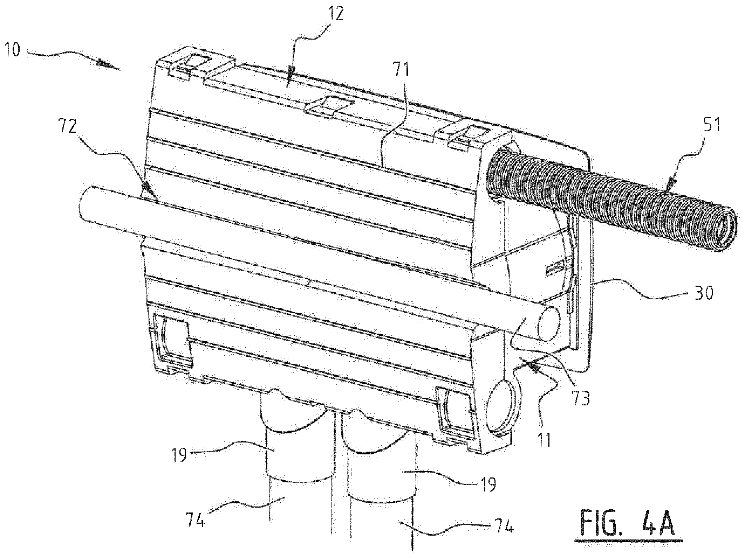

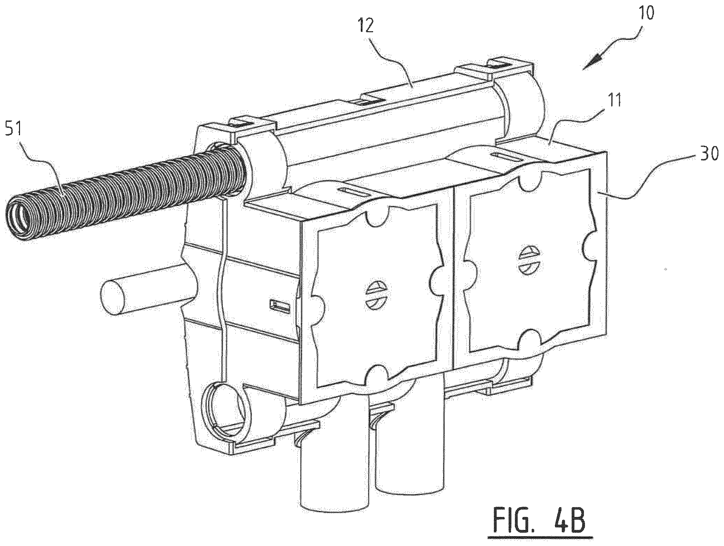

Figures 4A and 4B illustrate the assembly in the assembled state in which covers 30 are provided on the open front end 13 of the mounting box 10. This assembled state can be achieved in a mould. The covers 30 are hereby placed on the bottom of the mould. The closing part 12 can, at its outer back side, be provided with alignment grooves or ribs 71 and a channel 72 for receiving a rod 73 of a reinforcement; see figure 4A. This allows for proper alignment of the assembly in the mould. In the cable trays 19 rigid tubes 74 can be provided. These rigid conduits 74 can be provided at the bottom of the wall using a magnet. In that way the mounting box 10 can further be fixed to the bottom of the mould. The rigid conduits 74 may, for example, be connected to the magnets in such a way that they push the mounting box 10 against the bottom of the mould, thereby ensuring a stable positioning of the mounting boxes 10 in the mould. Also the provision of a reinforcement ensures that the mounting boxes 10 are further pushed against the bottom of the mould.

According to other embodiments, the covers 30 can be provided with a double-sided tape, preferably a tape which, at one side, adheres well to the cover 30 and, on the other side, adheres well to the bottom of the mould. According to an alternative embodiment, a hot-melt adhesive can be provided on the cover 30 to glue the mounting box 10 to the bottom of the mould. According to further developed embodiments not illustrated here, positioning feet, which break off when the mounting box 10 is pressed against the bottom of the mould, can be provided on the covers 30. This makes it possible to, for example, provide double-sided tape to the covers 30 and to then place them at the bottom of the mould without the tape touching the bottom. This allows for proper alignment of the mounting boxes 10 before they are finally fixed to the bottom by pushing the mounting box 10 down, resulting in the positioning feet breaking off, and the mounting box 10 being stuck to the bottom. According to another embodiment, the covers 30 can be provided with glue channels in which glue can be injected. That way glue can be injected after the mounting box 10 has been placed on the mould. These glue channels can be provided in such a way that an installer can easily check when a sufficient amount of glue has been provided in the glue channels.

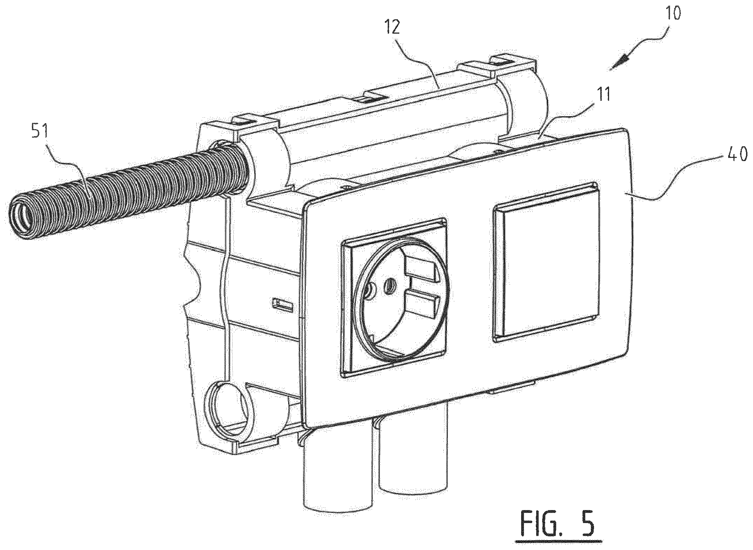

Figure 5 illustrates the assembly of figures 2A and 2B in the assembled state after the covers 30 have been removed and the cover frame 40 has been mounted. The cover frame 40 is preferably simply clickable onto the insert parts 20. Therefore, the insert part 20 is provided with profilings and/or cutouts, allowing a coupling with the back side of the profilings and/or cutouts made in the back side of the cover frame 40. In the illustrated example, the first insert part 20 comprises a shut-off plate 21 which is attached to a mounting profile 22 (the shut-off plate 21 could also be replaced by a switch module), and the cover frame 40 is clickable on the mounting profile 22. The second insert part 20 comprises a socket module 21, a mounting profile 22, and a central plate, and the cover frame 40 is clickable on the central plate, see figures 2A and 2B.

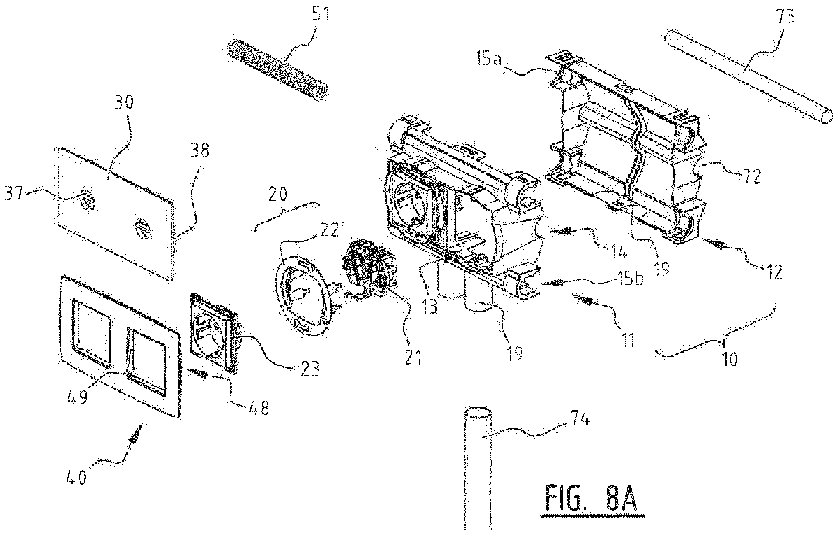

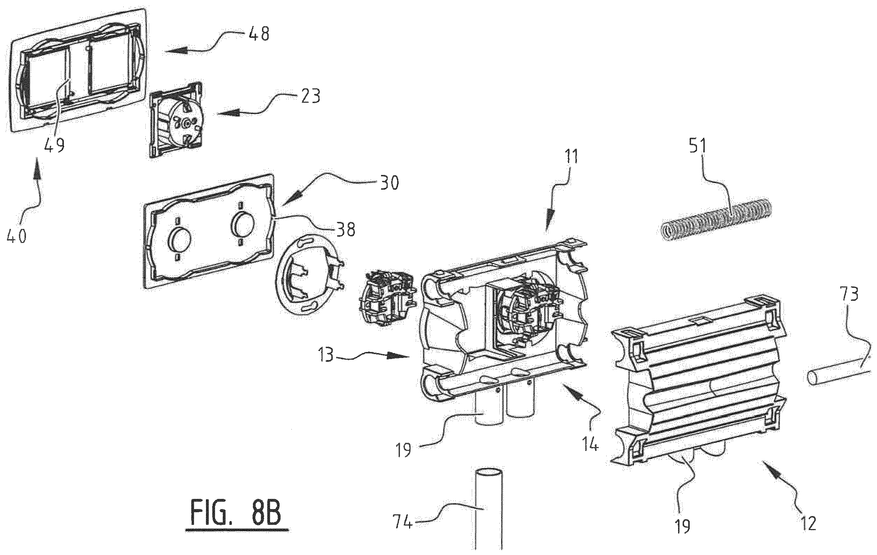

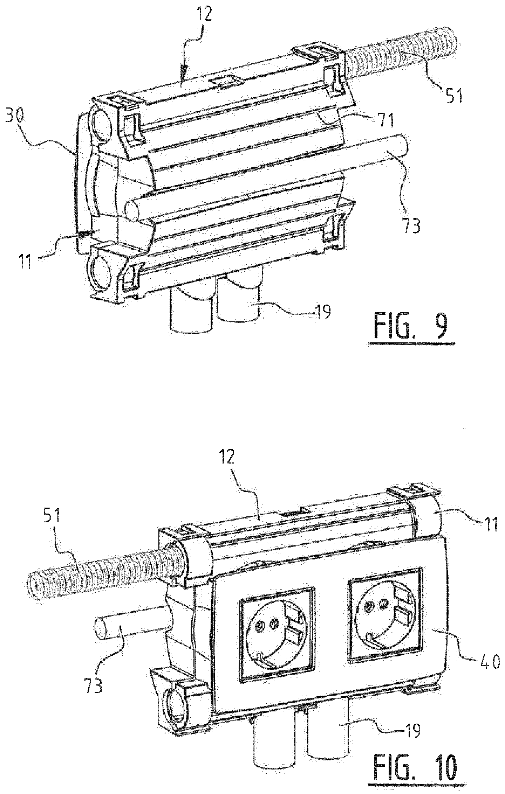

A second embodiment of an assembly will now be described by means of figures 8-10. Also in the second embodiment, the mounting box 10 is intended for building in two functional modules 21. The mounting box 10 comprises two tubular parts 11 which are formed as a single part and a closing part 12. The tubular parts 11 have an open front end 13 and an open back end 14. The insert part 20 with the functional module 21 is provided into the tubular part 11 via the open front end 13. The insert part 20 is, according to this embodiment, mountable in the tubular part 11 in only one position. In the second embodiment, the functional modules 21 are mounted somewhat recessed in the tubular parts 11, without the central plate 23. The cover 30 is, at its back side, designed in such a way that it is mountable on the tubular parts 11. Whereas two covers 30 are provided in the first embodiment, the second embodiment uses only one cover 30. A person skilled in the art understands that this could also be two covers 30. The back side of the cover 30 may in particular be provided with a profiling 38 which is complementary to the shape of the inner wall of the tubular part 11 at the height of the open front end 13. According to this embodiment, the central plate 23 is mounted together with the cover frame 40 after removing the cover 30. The cover frame 40 is at its back side provided with a profiling 48, for example in the form of a flange, which fits in the open front end 13 of the mounting box 10. Also at the level of the inner perimeter of the cover frame 40, a flange 49 is preferably provided at the back side, which connects to an outer edge of the central plate 23. Figures 9 and 10 show the assembly in the assembled state, respectively seen from the back side where the cover 30 is mounted to the front side, and from the front side, where central plates 23 and a cover frame 40 are mounted against the front side. These figures are similar to figures 4A and 5 that were described above, and the comments made with respect to figures 4A and 5 also apply to figures 9 and 10. It has to be noted that the cover frame 40 and central plates 23 can also be formed as a cover element in one piece.

The second embodiment has similar advantages as the first embodiment, with the difference that the insert part 20 is not mountable in different positions. According to yet another embodiment, the insert part 20 is mounted in finished form into the mounting box such that, after removing the cover 30 or foil, no cover elements need to be confirmed any more.

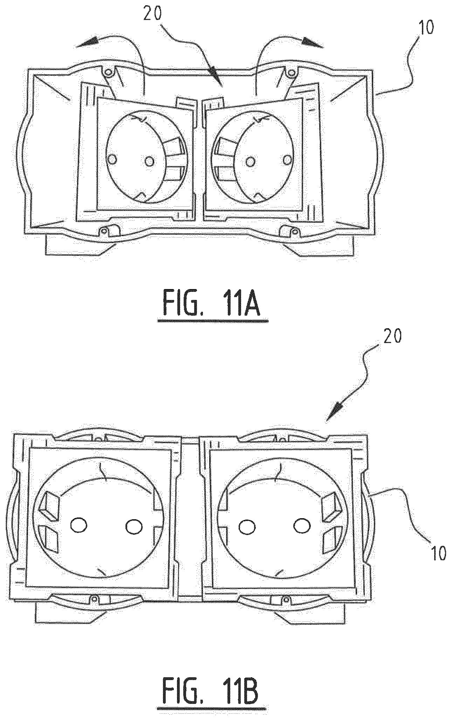

Figures 11A and 11B illustrate a third embodiment of an assembly according to the invention in a building-in position and a use position respectively. In the third embodiment two insert parts 20 are rotatably mounted in a mounting box 10. More specifically, each insert part 20 is hingedly connected to an inner wall of the mounting box 10. In this way the insert parts 20 can be rotated in a first building-in position in which they do not protrude out of the mounting box 10, such that a cover 30 can be provided for closing the mounting box 10. After building the mounting box 10 into a wall, the cover 30 can be removed and the insert parts 20 can be rotated to a use position, see figure 11B, after which a cover frame 40 is mountable on the insert parts 20. The mounting box 10 and the insert parts 20 are preferably designed such that the rotating of the insert parts 20 towards the use position ensures that these insert parts 20 are locked in the use position, which means that they cannot be rotated back to the building-in position. To this end, for example spring-loaded lips can be provided at the top and/or bottom side of the insert parts 20, which spring-loaded lips spring out of the mounting box 10 when the final position is reached.

In the above-described embodiments, the mounting box 10 is always covered with a cover 30. However, it is also possible to cover the mounting boxes 10 with a foil 30 instead of with a cover 30. Such a foil 30 can be provided to the open front end 13 of the mounting box 10 in any way known by a person skilled in the art. It is further also possible to manufacture the mounting box 10 with a cover 30 that is formed as one piece with the tubular part 11. Such a cover 30 is typically provided with a tear or break line, along which the cover 30 can be torn off.

The above-described embodiments have the advantage that the functional modules 21 can be easily built into prefabricated walls, whereby, when providing the prefabricated walls at the construction site, only minimal actions are necessary to have the functional modules 21 up and running, resulting in a big time saving at the construction site. The workmen at the construction site merely need to remove the cover or foil 30 and mount a cover frame 40 and/or central plate 23 and/or shut-off plate. In that way, the final assembly of the functional modules 21 can be done by untrained staff and rather quickly. In addition, embodiments of assemblies and methods according to the invention guarantee that the functional modules 21 are well positionable in the walls, by which a very good alignment of the cover frames 40 is obtained when finishing the installation.

The invention is not limited to the above described examplary embodiments, and a person skilled in the art understands that many modifications can be thought of within the scope of the invention, which is only determined by the following claims.

## Claims

1. Assembly for building into a wall, especially a prefabricated wall, comprising:
a mounting box (10) comprising at least one tubular part (11) with a front end (13) and an open back end (14), the front end (13) being closed with a removable cover (30),
at least one insert part (20) mounted in the mounting box (10) and supporting at least one functional module (21),
at least one cable (50) connected to the at least one functional module (21),
a closing part (12) that is attached against the open back end (14) of the at least one tubular part (11), such that the mounting box (10) encloses the at least one functional module (21),
whereby the at least one functional module (21) is connected with the at least one cable (50) via the open back end (14) of the at least one tubular part (11) when the closing part (12) is removed from the open back end (14), and is attached in the mounting box (10) such that it is usable for an end user via the front end (13), when the removable cover (30) is removed, and
comprising one or more conduits (51) receiving the at least one cable (50) or for a pull wire,
**characterized in that** the at least one tubular part (11) and the closing part (12) are tightly enclosing the one or more conduits (51).

2. Assembly according to claim 1, **characterized in that** the at least one tubular part (11) and the closing part (12) form at least one cable tray (15; 15a, 15b) for receiving the conduit (51).

3. Assembly according to claim 2, **characterized in that** the at least one cable tray (15; 15a, 15b) is adapted for receiving a conduit (51) with circumferentially extending ribs, whereby the at least one cable tray (15; 15a, 15b) is provided with internal ribs that are clamped between two adjacent ribs of the conduit (51).

4. Assembly according to any of the previous claims, **characterized in that** the at least one tubular part (11) and the closing part (12) form a first and second cable tray (15a, 15b) each receiving a conduit (51), whereby the first and second cable tray (15a, 15b) are located on opposite sides of the at least one functional module (21).

5. Assembly according to any of the previous claims, **characterized in that** the closing part (12) is, on its outer side, provided with a channel (72) which is designed for receiving a reinforcement bar (73).

6. Assembly according to any of the previous claims, **characterized in that** the at least one insert part (20) is provided with at least two positioning elements (27, 28) and that the mounting box (10) is provided at its inner side with a profiling (18) designed to cooperate with the at least two positioning elements (27, 28) for the positioning of the at least one functional module (21) into the mounting box (10).

7. Assembly according to any of the previous claims, **characterized in that** the mounting box (10) and the at least one insert part (20) are designed so as to place the at least one insert part (20) in an installation position, in which installation position the at least one cable (50) can be connected with the at least one functional module (21) via the open back end (14) of the at least one tubular part (11), whereby the at least one insert part (20) can be brought from the installation position to another position located further in the mounting box (10).

8. Assembly according to claim 7, **characterized in that** the mounting box (10) and the at least one insert part (20) are further designed to be able to position the at least one insert part (20) in at least a building-in position and a use position, whereby the at least one insert part (20) can be moved from the installation position to the building-in position and, from there, can be brought to the use position, whereby the at least one insert part (20) in the use position, protrudes from the front end (13) of the mounting box (10) and whereby the building-in position is situated between the use position and the installation position.

9. Method for building at least one functional module (21) into a wall, comprising:
providing a mounting box (10) comprising at least one tubular part (11) with a front end (13) and an open back end (14),
providing at least one insert part (20) mountable in the mounting box (10) and supporting at least one functional module (21);
providing a closing part (12);
providing at least one cable (50) connectable to the at least one functional module (21); and
connecting the at least one cable (50) with the at least one functional module (21) and mounting the at least one functional module (21) in the at least one tubular part (11),
attaching the closing part (12) to the open back end (14); and
building the mounting box (10) into the wall;
whereby connecting the at least one cable (50) to the at least one functional module (21) is performed through the open back end (14); and
whereby building the mounting box (10) into the wall is performed so that the at least one functional module (21) is accessible by the end user through the front end (13), and
whereby the front end (13) is open, and that building the mounting box (10) into the wall comprises the following steps: closing the open front end (13) of the mounting box (10);
mounting the closed mounting box (10) in a mould with the closed front end (13) facing the bottom of the mould; and
pouring wall material into the mould, and
whereby the at least one cable (50) is provided in one or more conduits (51);
**characterized in**
**that** each conduit (51) is applied between the at least one tubular part (11) and the closing part (12).

10. Method according to claim 9, **characterized in that** the at least one insert part (20) is, during connecting the at least one cable (50), attached in an installation position in the at least one tubular part (11); and that, after connecting the at least one cable (50), the at least one insert part (20) is brought in a position deeper in the mounting box (10), after which the closing part (12) is mounted against the open back end (14).

## Patentansprüche

1. Anordnung zum Einbau in eine Wand, insbesondere in eine vorgefertigte Wand, umfassend:
eine Montagedose (10) mit mindestens einem rohrförmigen Teil (11) mit einem vorderen Ende (13) und einem offenen hinteren Ende (14), wobei das vordere Ende (13) mit einer abnehmbaren Abdeckung (30) geschlossen ist,
mindestens einem Einsatzteil (20), das in der Montagedose (10) montiert ist und mindestens ein Funktionsmodul (21) trägt,
mindestens ein Kabel (50), das mit dem mindestens einen Funktionsmodul (21) verbunden ist,
ein Verschlussteil (12), das gegen das offene Ende (14) des mindestens einen Rohrteils (11) befestigt ist, so dass die Montagedose (10) das mindestens eine Funktionsmodul (21) umschließt,
wobei das mindestens eine Funktionsmodul (21) mit dem mindestens einen Kabel (50) über das offene Ende (14) des mindestens einen rohrförmigen Teils (11) verbunden ist, wenn das Verschlussteil (12) aus dem offenen hinteren Ende (14) entfernt wird, und in der Montagedose (10) so befestigt ist, dass es für einen Endnutzer über das vordere Ende (13) verwendbar ist, wenn die abnehmbare Abdeckung (30) entfernt wird, und umfassend eine oder mehrere Leitungen (51), die das mindestens eine Kabel (50) oder einen Zugdraht aufnehmen, **dadurch gekennzeichnet, dass** das mindestens eine rohrförmige Teil (11) und das Verschlussteil (12) die eine oder die mehreren Leitungen (51) dicht umschließen.

2. Anordnung nach Anspruch 1, **dadurch gekennzeichnet, dass** das mindestens eine rohrförmige Teil (11) und das Verschlussteil (12) mindestens eine Kabelrinne (15; 15a, 15b) zur Aufnahme der Leitung (51) bilden.

3. Anordnung nach Anspruch 2, **dadurch gekennzeichnet, dass** die mindestens eine Kabelrinne (15; 15a, 15b) zur Aufnahme einer Leitung (51) mit umlaufend verlaufenden Rippen ausgebildet ist, wobei die mindestens eine Kabelrinne (15; 15a, 15b) mit inneren Rippen versehen ist, die zwischen zwei benachbarten Rippen der Leitung (51) eingespannt sind.

4. Anordnung nach einem der vorhergehenden Ansprüche, **dadurch gekennzeichnet, dass** das mindestens eine rohrförmige Teil (11) und das Verschlussteil (12) eine erste und eine zweite Kabelrinne (15a, 15b) bilden, die jeweils eine Leitung (51) aufnehmen, wobei sich die erste und die zweite Kabelrinne (15a, 15b) auf gegenüberliegenden Seiten des mindestens einen Funktionsmoduls (21) befinden.

5. Anordnung nach einem der vorhergehenden Ansprüche, **dadurch gekennzeichnet, dass** das Verschlussteil (12) an seiner Außenseite mit einem Kanal (72) versehen ist, der zur Aufnahme eines Verstärkungsstabes (73) ausgebildet ist.

6. Anordnung nach einem der vorhergehenden Ansprüche, **dadurch gekennzeichnet, dass** das mindestens eine Einsatzteil (20) mit mindestens zwei Positionierelementen (27, 28) versehen ist und dass die Montagedose (10) an ihrer Innenseite mit einer Profilierung (18) versehen ist, die mit den mindestens zwei Positionierelementen (27, 28) zur Positionierung des mindestens einen Funktionsmoduls (21) in die Montagedose (10) zusammenwirkt.

7. Anordnung nach einem der vorhergehenden Ansprüche, **dadurch gekennzeichnet, dass** die Montagedose (10) und das mindestens eine Einsatzteil (20) so ausgebildet sind, dass sie das mindestens eine Einsatzteil (20) in eine Installationsposition bringen, in der das mindestens eine Kabel (50) mit dem mindestens einen Funktionsmodul (21) über das offene Ende (14) des mindestens einen rohrförmigen Teils (11) verbindbar ist, wobei das mindestens eine Einsatzteil (20) aus der Installationsposition in eine andere, Position weiter in der Montagedose (10) gebracht werden kann.

8. Anordnung nach Anspruch 7, **dadurch gekennzeichnet, dass** die Montagedose (10) und das mindestens eine Einsatzteil (20) ferner so ausgelegt sind, dass sie das mindestens eine Einsatzteil (20) in mindestens eine Einbauposition und eine Gebrauchsposition bringen können, wobei das mindestens eine Einsatzteil (20) von der Installationsposition in die Einbauposition und von dort aus in die Gebrauchsposition gebracht werden kann, wobei das mindestens eine Einsatzteil (20) in der Gebrauchsposition aus dem vorderen Ende (13) der Montagedose (10) ragt und wobei sich die Einbauposition zwischen der Gebrauchsposition und der Einbauposition befindet.

9. Verfahren zum Einbau mindestens eines Funktionsmoduls (21) in eine Wand, umfassend:
Bereitstellen einer Montagedose (10), die mindestens ein rohrförmiges Teil (11) mit einem vorderen Ende (13) und einem offenen hinteren Ende (14) umfasst;
Bereitstellen mindestens eines Einsatzteils (20), das in der Montagedose (10) montierbar ist und
mindestens ein Funktionsmodul (21) aufnimmt;
Bereitstellen eines Verschlussteils (12);
Bereitstellen mindestens eines Kabels (50), das mit dem mindestens einen Funktionsmodul (21) verbindbar ist; und
Verbinden des mindestens einen Kabels (50) mit dem mindestens einen Funktionsmodul (21) sowie Montieren des mindestens einen Funktionsmoduls (21) in dem mindestens einen rohrförmigen Teil (11); Anbringen des Verschlussteils (12) an dem offenes hinteres Ende (14); und
Einbau der Montagedose (10) in die Wand;
wobei das Verbinden des mindestens einen Kabels (50) mit dem mindestens einen Funktionsmodul (21) durch das offene hintere Ende (14) erfolgt; und
wobei der Einbau der Montagedose (10) in die Wand so erfolgt, dass das mindestens ein Funktionsmodul (21) durch das vordere Ende (13) für den Endnutzer zugänglich ist und wobei das vordere Ende (13) offen ist, und wobei der Einbau der Montagedose (10) in die Wand die folgenden Schritte umfasst:
Schließen des offenen vorderen Endes (13) der Montagedose (10);
Montieren der geschlossenen Montagedose (10) in einer Form, wobei das geschlossene vordere Ende (13) dem Boden der Form zugewandt ist; und
Gießen von Wandmaterial in die Form, und wobei das mindestens eine Kabel (50) in einer oder mehreren Leitungen (51) vorhanden ist;
**dadurch gekennzeichnet, dass** jede Leitung (51) zwischen dem mindestens einen rohrförmigen Teil (11) und dem Verschlussteil (12) verläuft.

10. Verfahren nach Anspruch 9, **dadurch gekennzeichnet, dass** das mindestens eine Einsatzteil (20) beim Verbinden des mindestens einen Kabels (50) in einer Installationsposition in dem mindestens einen rohrförmigen Teil (11) befestigt ist; und
dass nach dem Verbinden des mindestens einen Kabels (50) das mindestens eine Einsatzteil (20) in der Montagebox (10) in eine tiefere Position gebracht wird, wonach das Verschlussteil (12) gegen das offene hintere Ende (14) montiert wird.

## Revendications

1. Assemblage pour la construction dans un mur, en particulier un mur préfabriqué, comprenant :
un boîtier de montage (10) comprenant au moins une pièce tubulaire (11) avec une extrémité avant (13) et une extrémité arrière ouverte (14), l'extrémité avant (13) étant fermée par un couvercle amovible (30),
au moins une pièce d'insertion (20) montée dans le boîtier de montage (10) et soutenant au moins un module fonctionnel (21),
au moins un câble (50) connecté à l'au moins un module fonctionnel (21),
une pièce de fermeture (12) qui est fixée sur l'extrémité arrière ouverte (14) de l'au moins une pièce tubulaire (11) de sorte que le boîtier de montage (10) entoure l'au moins un module fonctionnel (21),
dans lequel l'au moins un module fonctionnel (21) est relié à l'au moins un câble (50) par l'extrémité arrière ouverte (14) de l'au moins une pièce tubulaire (11) lorsque la pièce de fermeture (12) est retirée de l'extrémité arrière ouverte (14) et fixée dans le boîtier de montage (10) de sorte à pouvoir être utilisé par un utilisateur final par l'extrémité avant (13) quand le couvercle amovible (30) est retiré, et
comprenant un ou plusieurs conduits (51) recevant l'au moins un câble (50) ou pour un fil de traction,
**caractérisé en ce que** l'au moins une pièce tubulaire (11) et la pièce de fermeture (12) entourent de manière étanche le ou les conduits (51).

2. Assemblage selon la revendication 1, **caractérisé en ce que** l'au moins une pièce tubulaire (11) et la pièce de fermeture (12) forment au moins un chemin de câbles (15 ; 15a, 15b) permettant de recevoir le conduit (51).

3. Assemblage selon la revendication 2, **caractérisé en ce que** l'au moins un chemin de câbles (15 ; 15a, 15b) est adapté pour recevoir un conduit (51) avec des nervures s'étendant circonférentiellement, l'au moins un chemin de câbles (15 ; 15a, 15b) étant pourvu de nervures internes qui sont fixées entre deux nervures adjacentes du conduit (51).

4. Assemblage selon l'une quelconque des revendications précédentes, **caractérisé en ce que** l'au moins une pièce tubulaire (11) et la pièce de fermeture (12) forment un premier et un second chemin de câbles (15a, 15b) recevant chacun un conduit (51), les premier et le second chemins de câbles (15a, 15b) étant situés sur les côtés opposés de l'au moins un module fonctionnel (21).

5. Assemblage selon l'une quelconque des revendications précédentes, **caractérisé en ce que** la pièce de fermeture (12) est munie, sur son côté extérieur, d'un canal (72) destiné à recevoir une barre de renfort (73).

6. Assemblage selon l'une quelconque des revendications précédentes, **caractérisé en ce que** l'au moins une pièce d'insertion (20) est munie d'au moins deux éléments de positionnement (27, 28) et **en ce que** le boîtier de montage (10) est pourvu sur sa face intérieure d'un profilé (18) conçu pour coopérer avec les au moins deux éléments de positionnement (27, 28) pour le positionnement de l'au moins un module fonctionnel (21) dans le boîtier de montage (10).

7. Assemblage selon l'une quelconque des revendications précédentes, **caractérisé en ce que** le boîtier de montage (10) et l'au moins une pièce d'insertion (20) sont conçus de manière à placer l'au moins une pièce d'insertion (20) dans une position d'installation, position d'installation dans laquelle l'au moins un câble (50) peut être relié à l'au moins un module fonctionnel (21) par le biais de l'extrémité arrière ouverte (14) de l'au moins une pièce tubulaire (11), moyennant quoi l'au moins une pièce d'insertion (20) peut être amenée de la position d'installation à une autre position, située plus loin dans le boîtier de montage (10).

8. Assemblage selon la revendication 7, **caractérisé en ce que** le boîtier de montage (10) et l'au moins une pièce d'insertion (20) sont en outre conçus pour pouvoir positionner l'au moins une pièce d'insertion (20) dans au moins une position de construction et dans une position d'utilisation, l'au moins une pièce d'insertion (20) pouvant être déplacée de la position d'installation à la position de construction et, de là, être amenée dans la position d'utilisation, moyennant quoi l'au moins une pièce d'insertion (20) dépasse, dans la position d'utilisation, à partir de l'extrémité avant (13) du boîtier de montage (10) et moyennant quoi la position de construction se trouve entre la position d'utilisation et la position d'installation.

9. Procédé de construction d'au moins un module fonctionnel (21) dans un mur, comprenant :
l'utilisation d'un boîtier de montage (10) comprenant au moins une pièce tubulaire (11) dotée d'une extrémité avant (13) et d'une extrémité arrière ouverte (14), l'utilisation d'au moins une pièce d'insertion (20) pouvant être montée dans le boîtier de montage (10) et soutenant au moins un module fonctionnel (21) ;
l'utilisation d'une pièce de fermeture (12) ;
l'utilisation d'au moins un câble (50) pouvant être connecté à l'au moins un module fonctionnel (21) ; et
la connexion de l'au moins un câble (50) avec l'au moins un module fonctionnel (21) et le montage de l'au moins un module fonctionnel (21) dans l'au moins une pièce tubulaire (11), avec fixation de la pièce de fermeture (12) sur l'extrémité arrière ouverte (14) ; et
le montage du boîtier de montage (10) dans le mur ;
moyennant quoi la connexion de l'au moins un câble (50) à l'au moins un module fonctionnel (21) s'effectue par l'extrémité arrière ouverte (14) ; et
le montage du boîtier de montage (10) dans le mur étant réalisé de sorte que l'au moins un module fonctionnel (21) soit accessible par l'utilisateur final par l'extrémité avant (13), et moyennant quoi l'extrémité avant (13) est ouverte, et en ce que le montage du boîtier de montage (10) dans le mur comprend les étapes suivantes :
fermer l'extrémité avant ouverte (13) du boîtier de montage (10) ;
monter le boîtier de montage fermé (10) dans un moule tandis que l'extrémité avant fermée (13) fait face au fond du moule ; et
couler un matériau de paroi dans le moule, moyennant quoi l'au moins un câble (50) se trouve dans au moins un conduit (51) ;
**caractérisé en ce que** chaque conduit (51) est appliqué entre l'au moins une pièce tubulaire (11) et
la pièce de fermeture (12).

10. Procédé selon la revendication 9, **caractérisé en ce que** l'au moins une pièce d'insertion (20) est, lors du raccordement de l'au moins un câble (50), fixée dans une position d'installation dans l'au moins une pièce tubulaire (11) ; et
**en ce que**, après avoir raccordé l'au moins un câble (50), l'au moins une pièce d'insertion (20) est amenée dans une position plus profonde dans le boîtier de montage (10), après quoi la pièce de fermeture (12) est montée contre l'extrémité arrière ouverte (14).
